# EUROPEAN PATENT SPECIFICATION

(11) **EP 2 482 502 B1**
(45) Date of publication and mention of the grant of the patent: **10.05.2017**
(21) Application number: 11782984.6
(22) Date of filing: 24.05.2011
(51) Int. Cl.: H04L 12/28, H04L 12/46, H04L 29/12

(54) **MESSAGE HANDLING METHOD AND APPARATUS**
VORRICHTUNG UND VERFAHREN ZUR HANDHABUNG VON NACHRICHTEN
PROCÉDÉ ET APPAREIL DE TRAITEMENT DE MESSAGES

(43) Date of publication of application: 01.08.2012
(73) Proprietor: Huawei Technologies Co., Ltd., Longgang District Shenzhen, Guangdong 518129 (CN)
(72) Inventor: MA, Yun, Shenzhen Guangdong 518129 (CN); ZHAO, Zhiwang, Shenzhen Guangdong 518129 (CN); FU, Tianfu, Shenzhen Guangdong 518129 (CN); GAO, Hai, Shenzhen Guangdong 518129 (CN); WANG, Xiaodong, Shenzhen Guangdong 518129 (CN); YU, Zhouyi, Shenzhen Guangdong 518129 (CN)
(74) Representative: Pfenning, Meinig & Partner mbB
(86) International application number: PCT/CN2011/074543
(87) International publication number: WO 2011/144067

(56) References cited:
- WO-A1-2005/018174
- CN-A- 101 075 962
- CN-A- 101 409 685
- Vlaeminck K: "Service Enablers for Converged IP Access Networks", , 2007, page 41-62, XP002682596, Retrieved from the Internet: URL:http://www.vlaeminck.eu/koert/pdf/phd_ thesis_koert_vlaeminck.pdf [retrieved on 2012-08-30]

## Description

### FIELD OF THE INVENTION

The present invention relates to the field of communications, and in particular, to a message processing method and device in the field of communications.

### BACKGROUND OF THE INVENTION

With popularization of a broadband network, types of home Internet protocol (Internet Protocol, referred to as "IP") terminals become more and more abundant, and therefore, the network is becoming more and more complicated. A home network uses a home gateway (Home Gateway, referred to as "HG") to provide access of various home informatization terminals, which includes multiple kinds of access means, such as plain old telephone service (Plain Old Telephone Service, referred to as "POTS") access, cable television (Cable Television, referred to as "CATV") access, Internet protocol television (Internet Protocol Television, referred to as "IPTV") access, Internet protocol telephone access, and personal computer (Personal Computer, referred to as "PC") access. The higher complexity of a service is, the higher complexity of an HG is, which imposes a higher requirement on operational support of an operator. If a newly opened service, such as deep packet inspection (Deep Packet Inspection, referred to as "DPI") and uniform resource locator filtering (Uniform Resource Locator Filtering, referred to as "URL"), cannot be implemented on an existing HG, the operator needs to provide a completely new HG for a home user, thus making deployment of a new service more difficult.

In order to perform centralized management on HGs, that is, to concentrate distributed HGs to a central office, and in order that the operator is responsible for maintenance of the home network, a virtual machine technology and an application program multiple instance technology are put forward. With a method based on the virtual machine technology and the application program multiple instance technology, a general HG can be replaced with simple layer 2 access network equipment, so that the complexity of the HG can be reduced, and fault diagnosis and processing may be performed on central office equipment.

However, the method based on the virtual machine technology or the application program multiple instance technology in the prior art is not competent for large-scale use. The virtual machine technology, because of the insufficient number of virtualized virtual machine instances, can hardly satisfy a requirement of providing services for thousands of homes by using a piece of equipment on an operator's network. Because a requirement imposed by the program multiple instance technology on a memory and a central processing unit (Central Processing Unit, referred to as "CPU") is too high, an objective of high performance, miniaturization and low power consumption cannot be achieved.

Vlaeminck K: "Service Enablers for Converged IP Access Networks", 2007, pages 41-62, relates to a Virtual Home Gateway.

CN 101409685 A relates to a forwarding method based on VLAN mapping and an access device thereof.

### SUMMARY OF THE INVENTION

The present invention provide a message processing method and device, which can use a limited resource to virtualize a large number of virtual home gateways that provide a home gateway function, and can satisfy a requirement of high performance, miniaturization, and low power consumption.

In one aspect, the present invention provides a message processing method. The method includes: receiving a message from external equipment; encapsulating the message with a virtual local area network VLAN label, where the VLAN label corresponds to a user equipment that sends or receives the message; and determining a virtual home gateway that corresponds to the VLAN label, so that the virtual home gateway processes the message that is encapsulated with the VLAN label, where the virtual home gateway corresponds to the user equipment; wherein the VLAN label comprises an outer-layer label and an inner-layer label, and the outer-layer label is used to determine a flow direction of the message.

In another aspect, the present provides a message processing device. The device includes: an interface board, configured to receive a message from external equipment, and configured to encapsulate the message with a virtual local area network VLAN label, where the VLAN label corresponds to a user equipment that sends or receives the message; and a service board, configured to determine a virtual home gateway that corresponds to the VLAN label, so that the virtual home gateway processes the message that is encapsulated with the VLAN label, where the virtual home gateway corresponds to the user equipment; wherein the VLAN label comprises an outer-layer label and an inner-layer label, and the outer-layer label is used to determine a flow direction of the message.

Based on the preceding technical solutions, with the method and device in the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

### BRIEF DESCRIPTION OF THE DRAWINGS

To describe the technical solutions in the embodiments of the present invention more clearly, the accompanying drawings required for describing the embodiments of the present invention are introduced briefly in the following. Apparently, the accompanying drawings in the following description are only some embodiments of the present invention, and persons of ordinary skill in the art may also derive other drawings from these accompanying drawings without creative efforts.
FIG 1 is a schematic flow chart of a message processing method according to an embodiment of the present invention;
FIG 2 is a schematic flow chart of a message processing method according to another embodiment of the present invention;
FIG 3 is a schematic flow chart of a message processing method according to another embodiment of the present invention; and
FIG 4 is a schematic flow chart of a message processing device according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments in the following description are merely a part rather than all of the embodiments of the present invention. Based on the embodiments of the present invention, all other embodiments obtained by persons of ordinary skill in the art without creative efforts shall fall within the protection scope of the present invention.

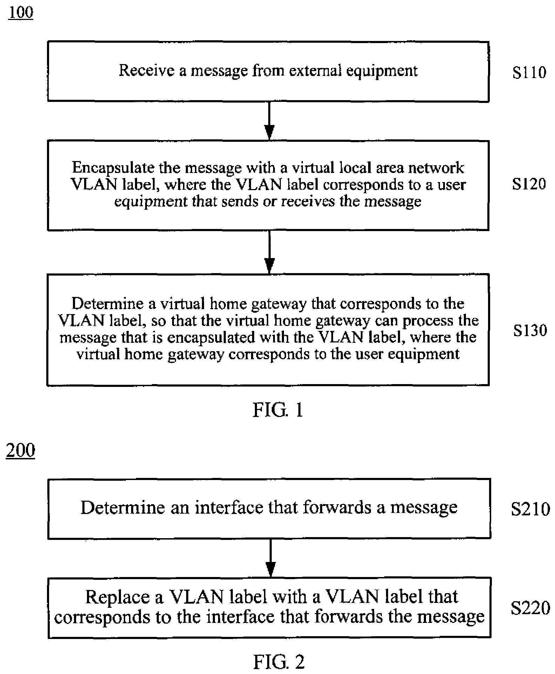

FIG 1 is a schematic flow chart of a message processing method 100 according to an embodiment of the present invention. As shown in FIG. 1, the method 100 includes:
S110: Receive a message from external equipment;
S120: Encapsulate the message with a virtual local area network VLAN label, where the VLAN label corresponds to a user equipment that sends or receives the message; and S130: Determine a virtual home gateway that corresponds to the VLAN label, so that the virtual home gateway can process the message that is encapsulated with the VLAN label, where the virtual home gateway corresponds to the user equipment.

With the method in this embodiment of the present invention, a received message is encapsulated with a VLAN label, the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

The preceding steps may be executed by a message processing device, and the message processing device may be access network equipment. Specifically, the access network equipment may be an optical line terminal (Optical Line Terminal, referred to as "OLT"). Merely the access network equipment is taken as an example for describing this embodiment of the present invention, but is not intended to limit this embodiment of the present invention.

In this embodiment of the present invention, the external equipment includes a user equipment and network equipment. When the device receives a message from a user equipment, the VLAN label corresponds to the user equipment that sends the message. When the device receives a message from network equipment, the VLAN label corresponds to a user equipment that receives the message.

In this embodiment of the present invention, the determining the VLAN label that corresponds to the user equipment may have different implementation methods in different networks. For example, an OLT executes the preceding steps, and when a giga-bit passive optical network encapsulation method (GPON Encapsulation Method, referred to as "GEM", where a giga-bit passive optical network (Giga-bit Passive Optical Network) is referred to as "GPON") interface (PORT) receives the message, the VLAN label corresponds to the GEM PORT interface, and the GEM PORT interface corresponds to the user equipment.

After the message processing device determines, according to the VLAN label, a virtual home gateway that corresponds to the user equipment, the virtual home gateway of the device performs further processing on the message that is encapsulated with the VLAN label. As shown in FIG 2, a method 200 for performing label replacement processing on the message by a virtual home gateway includes:
S210: Determine an interface that forwards the message.

S220: Replace the VLAN label with a VLAN label that corresponds to the interface that forwards the message.

Specifically, if the message is from a user equipment, the device encapsulates the message with a user side VLAN label, and after the device determines a virtual home gateway that corresponds to the user side VLAN label, the virtual home gateway determines an interface that forwards the message, and replaces the user side VLAN label with a network side VLAN label, where the user side VLAN label and the network side VLAN label are different, and are both corresponding to the user equipment.

Similarly, if the message is from network equipment, the device encapsulates the message with a network side VLAN label, and after the device determines a virtual home gateway that corresponds to the network side VLAN label, the virtual home gateway determines an interface that forwards the message to a user equipment, and replaces the network side VLAN label with a user side VLAN label, where the network side VLAN label and the user side VLAN label are different, and are both corresponding to the user equipment.

In the present invention, the VLAN label includes an outer-layer label and an inner-layer label to increase the number of supported virtual home gateways. The outer-layer label is further configured to determine a flow direction of the message, and at this time, the inner-layer label corresponds to a user equipment that receives or sends the message.

The replacing the VLAN label with the VLAN label that corresponds to the interface that forwards the message in S220 includes: replacing an outer-layer label of the VLAN label with an outer-layer label that corresponds to the interface that forwards the message.

In this embodiment of the present invention, after the device determines, according to the VLAN label, the virtual home gateway that corresponds to the user equipment, the virtual home gateway may further perform network address translation (Network Address Translation, referred to as "NAT") processing on the message that is encapsulated with the VLAN label. The virtual home gateway may perform NAT processing on the message according to the outer-layer label of the VLAN label. Specifically, the virtual home gateway performs the NAT processing on the message according to a network address translation NAT table that corresponds to the outer-layer label of the VLAN label.

Because the outer-layer label is used to determine the flow direction of the message, when the NAT processing is performed, only a NAT table that corresponds to the flow direction of the message may be searched, so as to reduce a workload of the searching and improve NAT processing efficiency.

A sequence number of each preceding process does not indicate an execution order, an execution order of each process should be determined according to a function and an internal logic of the process, and should not form any limitation to an implementation process of this embodiment of the present invention. For example, the message processing device or the virtual home gateway of the device may perform NAT processing first and then perform label replacement processing, may also perform label replacement processing first and then perform NAT processing, and may also perform NAT processing and label replacement processing concurrently.

After the message processing device performs label replacement processing on the message, or after the device performs label replacement processing and NAT processing on the message, if the message is from the user equipment, the device sends a processed message to the network equipment; and if the message is from the network equipment, the device sends the processed message to the user equipment.

With the method in this embodiment of the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied. In addition, with the method in this embodiment of the present invention, the received message is encapsulated with an outer-layer label and an inner-layer label, so that not only a large number of virtual home gateways that provide a home gateway function can be virtualized, but also message processing efficiency can be improved greatly.

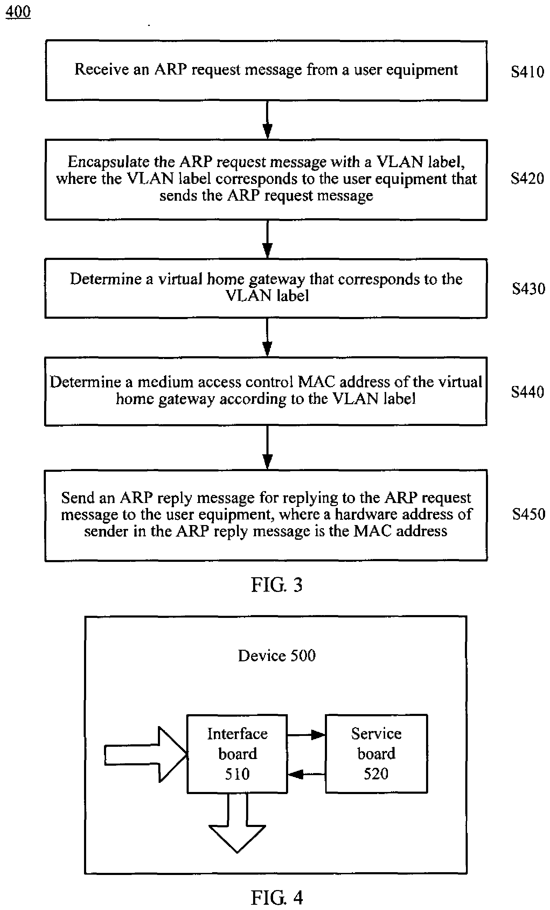

The message processing method according to this embodiment of the present invention is described in detail with reference to FIG 1 to FIG 2 in the preceding, and a method 400 for processing an address resolution protocol (address resolution protocol, referred to as "ARP") request message according to this embodiment of the present invention is described in detail with reference to FIG 3 in the following. As shown in FIG 3, the method 400 includes:
S410: Receive an ARP request message from a user equipment.

S420: Encapsulate the ARP request message with a VLAN label, where the VLAN label corresponds to the user equipment that sends the ARP request message.

S430: Determine a virtual home gateway that corresponds to the VLAN label, and a medium access control (Medium Access Control, referred to as "MAC") address of the virtual home gateway.

In this embodiment of the present invention, an MAC address of the virtual home gateway may be directly determined according to the VLAN label; and the MAC address of the virtual home gateway may also be determined according to identification of the virtual home gateway after the virtual home gateway that corresponds to the VLAN label is determined.

S440: Send an ARP reply message for replying to the ARP request message to the user equipment, where a hardware address of sender (Hardware address of sender) in the ARP reply message is the MAC address.

Because multiple virtual home gateways exist, and the multiple virtual home gateways provide a home gateway service for multiple user equipments respectively, protocol addresses (Protocol addresses) of respective virtual home gateways may be the same, for example, may be 192.168.0.1. With a general ARP method, different virtual home gateways with the same protocol address cannot be distinguished, so that a correct hardware address of sender needs to be returned according to the VLAN label that corresponds to the user equipment.

Similarly, when a message processing device according to the embodiment of the present invention receives a dynamic host configuration protocol (Dynamic Host Configuration Protocol, referred to as "DHCP") request message from a user equipment, a method for processing the DHCP request message is as follows: encapsulating, by the device, the DHCP request message with a VLAN label, where the VLAN label corresponds to the user equipment that sends the DHCP request message; determining, by the device, a corresponding virtual home gateway according to the VLAN label; and obtaining, by the device, according to the VLAN label or identification of the virtual home gateway, a configuration parameter for configuring a DHCP server of the virtual home gateway, and generating the DHCP server of the virtual home gateway according to the configuration parameter. The DHCP server provides a DHCP service for the user equipment according to the configuration parameter, for example, sends a DHCP response message to the user equipment, where the DHCP response message carries an IP address that is allocated to the user equipment.

With the method in this embodiment of the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

The message processing method according to this embodiment of the present invention is described in detail with reference to FIG 1 to FIG. 3 in the preceding, and the message processing device according to this embodiment of the present invention is described with reference to FIG. 4 in the following. In this embodiment of the present invention, the message processing device may be access network equipment. Specifically, the access network equipment may be an OLT. Merely the access network equipment is taken as an example for describing this embodiment of the present invention, but is not intended to limit this embodiment of the present invention.

As shown in FIG 4, the device 500 includes:
an interface board 510, configured to receive a message from external equipment, and configured to encapsulate the message with a virtual local area network VLAN label, where the VLAN label corresponds to a user equipment that sends or receives the message; and
a service board 520, configured to determine a virtual home gateway that corresponds to the VLAN label, so that the virtual home gateway processes the message that is encapsulated with the VLAN label, where the virtual home gateway corresponds to the user equipment.

Optionally, when a GEM PORT interface of the interface board 510 receives the message, the VLAN label corresponds to the GEM PORT interface, and the GEM PORT interface corresponds to the user equipment.

Optionally, after the service board 520 encapsulates the message with the VLAN label, the service board 520 is further configured to:
determine an interface that forwards the message; and
replace the VLAN label with a VLAN label that corresponds to the interface that forwards the message.

Optionally, after the service board 520 encapsulates the message with the VLAN label, the service board 520 is further configured to:
perform NAT processing on the message according to the VLAN label.

Optionally, the VLAN label includes an outer-layer label and an inner-layer label to increase the number of supported virtual home gateways. The outer-layer label may further be configured to determine a flow direction of the message, and at this time, the inner-layer label corresponds to the user equipment that receives or sends the message. Optionally, the service board 520 is specifically configured to: perform NAT processing on the message according to a network address translation NAT table that corresponds to the outer-layer label of the VLAN label.

Optionally, when the message received by the interface board 510 is an address resolution protocol ARP request message from the user equipment, the service board 520 is further configured to:
determine a medium access control MAC address of the virtual home gateway according to the VLAN label; and
send an ARP reply message for replying to the ARP request message to the user equipment, where a hardware address of sender in the ARP reply message is the MAC address.

The message processing device 500 according to this embodiment of the present invention may correspond to the access network equipment in this embodiment of the present invention, and the preceding operation and another operation and/or function of each module of the device 500 are respectively configured to implement corresponding procedures of the methods 100, 200, and 400 in FIG. 1 to FIG 3, which is not described here again for simplicity.

With the device in this embodiment of the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

In this embodiment of the present invention, services associated with the message that is received by the interface board 520 may be multiple services with different types. For example, the service may be an Internet access service, an IP telephone service, or an IP television service. The message processing method and the access network equipment according to this embodiment of the present invention are described respectively according to different service types in the following, and the access network equipment includes an interface board and a service board. It should be understood that, merely the access network equipment is taken as an example for describing this embodiment of the present invention, which is not intended to limit this embodiment of the present invention at all.

When a message received by the interface board of the access network equipment is from an Internet access terminal, if a point-to-point protocol over Ethernet (Point-to-Point Protocol over Ethernet, referred to as "PPPoE") link has already been established between the service board of the access network equipment and a broadband remote access server (Broadband Remote Access Server, referred to as "BRAS"), the service board encapsulates, the message after label replacement processing or the message after label replacement processing and NAT processing, into a PPPoE message, and sends the PPPoE message to an interface board at a network side, where the interface board at the network side is connected to network equipment.

In this embodiment of the present invention, if a message received by the interface board is from the Internet access terminal, but no PPPoE link is established between the service board and the BRAS, the service board may establish the PPPoE link with the BRAS. That is, a control plane executes a procedure of PPPoE link negotiation at this time.

When a message received by the interface board is from an IP telephone terminal, if an Internet protocol over Ethernet (Internet Protocol over Ethernet, referred to as "IPoE") link has already been established between the service board and a next generation network (Next Generation Network, referred to as "NGN") server, the service board performs MAC address replacement on the message after label replacement processing, or the message after label replacement processing and NAT processing, and sends the message after MAC address replacement to an interface board at a network side.

In this embodiment of the present invention, if a message received by the interface board is from the IP telephone terminal, but no IPoE link is established between the service board and an NGN server, the service board may establish the IPoE link with the NGN server. That is, a control plane executes a procedure of IPoE link negotiation at this time.

When a message received by the interface board is from an IP television (IPTV) terminal, if an IPoE link has already been established between the service board and an IPTV server, the service board performs MAC address replacement on the message after label replacement processing, or the message after label replacement processing and NAT processing, and sends the message after MAC address replacement to an interface board at a network side.

In this embodiment of the present invention, if a message received by the interface board is from the IPTV terminal, but no IPoE link is established between the service board and the IPTV server, the service board may establish the IPoE link with the IPTV server. That is, a control plane executes a procedure of IPoE link negotiation at this time.

When a message received by the interface board is a signaling control message required for applying for executing an application layer gateway (Application Layer Gateway, referred to as "ALG"), the service board needs to extract information, such as a private network IP address, a port number, and a protocol type that are included in a payload of the signaling control message, and perform application layer protocol resolution on a message that is received subsequently.

With the method in this embodiment of the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

A method for uplink processing a message that is associated with different service types according to this embodiment of the present invention is mainly described in the preceding, and a method for downlink processing a message according to this embodiment of the present invention is mainly described in the following.

In this embodiment of the present invention, when the service board determines that a message received by the interface board is a PPPoE message from network equipment, if a PPPoE link has already been established between the service board and a BRAS, and the PPPoE message is not a control message of the PPPoE link, the service board performs operations, such as label replacement, NAT processing, and MAC address replacement, on the PPPoE message, and sends a processed PPPoE message to an interface board at a user side.

If a PPPoE link has already been established between the service board and the BRAS, but the PPPoE message is a control message of the PPPoE link, a control plane processes the control message. If no PPPoE link that corresponds to a message received by the interface board is established, the control plane establishes a corresponding PPPoE link to the BRAS, and establishes a one-to-one corresponding relationship between the PPPoE link and the user equipment.

In this embodiment of the present invention, when the service board determines that a message received by the interface board is an IPoE message from the network equipment, if an IPoE link has already been established between the service board and an NGN server, the service board performs operations, such as label replacement, NAT processing, and MAC address replacement, on the IPoE message, and sends a processed IPoE message to an interface board at a user side.

When the service board determines that a message received by the interface board is an IPoE message from the network equipment, if an IPoE link has already been established between the service board and an IPTV server, the service board performs operations, such as label replacement, NAT processing, and MAC address replacement, on the IPoE message, and sends a processed IPoE message to an interface board at a user side.

It should be understood that, if no IPoE link that corresponds to a message received by the interface board is established, a control plane establishes a IPoE link to the NGN server or to the IPTV server, and establishes a one-to-one corresponding relationship between the IPoE link and the user equipment.

In this embodiment of the present invention, the NGN server may be a DHCP server in a VoIP network, and the IPTV server may also be a DHCP server in an IPTV network.

With the device in this embodiment of the present invention, a received message is encapsulated with a VLAN label, where the VLAN label corresponds to a user equipment and a virtual home gateway, that is, through the VLAN label, identification and isolation of the virtual home gateway can be implemented, and therefore, a limited resource can be used to virtualize a large number of virtual home gateways that provide a home gateway function, and a requirement of high performance, miniaturization, and low power consumption can be satisfied.

When the integrated unit is implemented in the form of a software functional unit and is sold or used as an independent product, the integrated unit may be stored in a computer readable storage medium. Based on this understanding, all technical solutions of the present invention or a part that makes contributions to the prior art or all or part of the technical solutions may be essentially embodied in the form of a software product. The computer software product may be stored in a storage medium, and includes a number of instructions that enable a piece of computer equipment (may be a personal computer, a server, or network equipment) to execute all or part of steps of the method described in each embodiment of the present invention. The preceding storage medium may be any medium capable of storing program codes, such as, a U disk, a removable hard disk, a read-only memory (ROM, Read-Only Memory), a random access memory (RAM, Random Access Memory), a magnetic disk, or an optical disk.

The preceding descriptions are merely specific embodiments of the present invention, but are not intended to limit the protection scope of the present invention. Various equivalent modifications or replacements may be easily thought of by any person skilled in the art without departing from the technical scope disclosed by the present invention, and these modifications or replacements shall all fall within the protection scope of the present invention. Therefore, the protection scope of the present invention shall be subject to that of the claims.

## Claims

1. A message processing method, comprising:
receiving (S110) a message from external equipment;
encapsulating (S120) the message with a virtual local area network VLAN label, wherein the VLAN label corresponds to a user equipment that sends or receives the message; and
determining (S130) a virtual home gateway that corresponds to the VLAN label, so that the virtual home gateway processes the message that is encapsulated with the VLAN label, wherein the virtual home gateway corresponds to the user equipment;
the method **characterized in that** the VLAN label comprises an outer-layer label and an inner-layer label, and the outer-layer label is used to determine a flow direction of the message.

2. The method according to claim 1, wherein when a giga-bit passive optical network encapsulation method GEM PORT interface receives the message, the VLAN label corresponds to the GEM PORT interface, and the GEM PORT interface corresponds to the user equipment.

3. The method according to claim 1 or 2, wherein after the encapsulating the message with the VLAN label, the method further comprises:
determining (S210) an interface that forwards the message; and
replacing (S220) the VLAN label with a VLAN label that corresponds to the interface that forwards the message.

4. The method according to claim 1, wherein after the encapsulating the message with the VLAN label, the method further comprises:
according to a network address translation NAT table that corresponds to the outer-layer label, performing NAT processing on the message.

5. The method according to any one of claims 1 to 4, wherein, the method further comprises:
when the message is an address resolution protocol ARP request message from the user equipment, determining (S440) a medium access control MAC address of the virtual home gateway according to the VLAN label; and
sending (S450) an ARP reply message for replying to the ARP request message to the user equipment, wherein a hardware address of sender in the ARP reply message is the MAC address.

6. A message processing device (500), comprising:
an interface board (510), configured to receive a message from external equipment, and configured to encapsulate the message with a virtual local area network VLAN label, wherein the VLAN label corresponds to a user equipment that sends or receives the message; and
a service board (520), configured to determine a virtual home gateway that corresponds to the VLAN label, so that the virtual home gateway processes the message that is encapsulated with the VLAN label, wherein the virtual home gateway corresponds to the user equipment;
the message processing device **characterized in that** the VLAN label comprises an outer-layer label and an inner-layer label, and the outer-layer label is used to determine a flow direction of the message.

7. The device according to claim 6, wherein when a GEM PORT interface of the interface board receives the message, the VLAN label corresponds to the GEM PORT interface, and the GEM PORT interface corresponds to the user equipment.

8. The device according to claim 6 or 7, wherein after the interface board encapsulates the message with the VLAN label, the service board is further configured to:
determine an interface that forwards the message; and
replace the VLAN label with a VLAN label that corresponds to the interface that forwards the message.

9. The device according to claim 6, wherein after the interface board encapsulates the message with the VLAN label, the service board is further configured to:
perform NAT processing on the message according to a network address translation NAT table that corresponds to the outer-layer label.

10. The device according to any one of claims 6 to 9, wherein the service board is further configured to:
when the message is an address resolution protocol ARP request message from the user equipment, determine a medium access control MAC address of the virtual home gateway according to the VLAN label; and
send an ARP reply message for replying to the ARP request message to the user equipment, wherein a hardware address of sender in the ARP reply message is the MAC address.

## Patentansprüche

1. Nachrichtenverarbeitungsverfahren, umfassend:
Empfangen einer Nachricht (S110) von einem externen Gerät;
Verkapseln (S120) der Nachricht mit einem Kennsatz eines virtuellen lokalen Netzwerks (Virtual Local Area Network label, VLAN-Kennsatz), wobei der VLAN-Kennsatz einem Benutzergerät entspricht, das die Nachricht sendet oder empfängt; und
Ermitteln (S130) eines virtuellen Home-Gateways, das dem VLAN-Kennsatz entspricht, sodass das virtuelle Home-Gateway die Nachricht verarbeitet, die mit dem VLAN-Kennsatz verkapselt wurde, wobei das virtuelle Home-Gateway dem Benutzergerät entspricht;
wobei das Verfahren **dadurch gekennzeichnet ist, dass** der VLAN-Kennsatz einen Kennsatz einer äußeren Schicht und einen Kennsatz einer inneren Schicht umfasst und wobei der Kennsatz der äußeren Schicht verwendet wird, um eine Ausbreitungsrichtung der Nachricht zu ermitteln.

2. Verfahren nach Anspruch 1, wobei, wenn eine GEM-PORT-Schnittstelle mit einem Verkapselungsverfahren eines passiven optischen Gigabit-Netzwerks die Nachricht empfängt, der VLAN-Kennsatz der GEM-PORT-Schnittstelle entspricht und die GEM-PORT-Schnittstelle dem Benutzergerät entspricht.

3. Verfahren nach Anspruch 1 oder 2, wobei das Verfahren nach dem Verkapseln der Nachricht mit dem VLAN-Kennsatz außerdem umfasst:
Ermitteln (210) einer Schnittstelle, welche die Nachricht weiterleitet; und
Ersetzen (S220) des VLAN-Kennsatzes durch einen VLAN-Kennsatz, welcher der Schnittstelle entspricht, welche die Nachricht weiterleitet.

4. Verfahren nach Anspruch 1, wobei das Verfahren nach dem Verkapseln der Nachricht mit dem VLAN-Kennsatz außerdem umfasst:
Ausführen einer NAT-Verarbeitung an der Nachricht gemäß einer Netzadressenübersetzungstabelle (Network Address Translation table, NAT-Tabelle), die dem Kennsatz der äußeren Schicht entspricht.

5. Verfahren nach einem der Ansprüche 1 bis 4, wobei das Verfahren außerdem umfasst:
wenn die Nachricht eine Anfragenachricht für ein Adressenlösungsprotokoll (Address Resolution Protocol request message, ARP-Anfragenachricht) von dem Benutzergerät ist, Ermitteln (S440) einer Medienzugangssteuerungsadresse (Medium Access Control address, MAC-Adresse) des virtuellen Home-Gateways gemäß dem VLAN-Kennsatz; und
Senden (S450) einer ARP-Antwortnachricht zum Antworten auf die ARP-Anfragenachricht an das Benutzergerät, wobei eine Hardware-Adresse des Senders in der ARP-Antwortnachricht die MAC Adresse ist.

6. Nachrichtenverarbeitungsvorrichtung (500), umfassend:
eine Schnittstellenkarte (510), die konfiguriert ist, um eine Nachricht von einem externen Gerät zu empfangen, und die konfiguriert ist, um die Nachricht mit einem Kennsatz eines virtuellen lokalen Netzwerks (Virtual Local Area Network label, VLAN-Kennsatz) zu verkapseln, wobei der VLAN-Kennsatz dem Benutzergerät entspricht, das die Nachricht sendet oder empfängt; und
eine Dienstkarte (520), die konfiguriert ist, um ein virtuelles Home-Gateway zu ermitteln, das dem VLAN-Kennsatz entspricht, sodass das virtuelle Home-Gateway die Nachricht verarbeitet, die mit dem VLAN-Kennsatz verkapselt wurde, wobei das virtuelle Home-Gateway dem Benutzergerät entspricht;
wobei die Nachrichtenverarbeitungsvorrichtung **dadurch gekennzeichnet ist, dass** der VLAN-Kennsatz einen Kennsatz einer äußeren Schicht und einen Kennsatz einer inneren Schicht umfasst und wobei der Kennsatz der äußeren Schicht verwendet wird, um die Ausbreitungsrichtung der Nachricht zu ermitteln.

7. Vorrichtung nach Anspruch 6, wobei, wenn eine GEM-PORT-Schnittstelle der Schnittstellenkarte die Nachricht empfängt, der VLAN-Kennsatz der GEM-PORT-Schnittstelle entspricht und die GEM-PORT-Schnittstelle dem Benutzergerät entspricht.

8. Vorrichtung nach Anspruch 6 oder 7, wobei die Dienstkarte nach dem Verkapseln der Nachricht mit dem VLAN-Kennsatz durch die Schnittstellenkarte, außerdem konfiguriert ist zum:
Ermitteln einer Schnittstelle, welche die Nachricht weiterleitet; und
Ersetzen des VLAN-Kennsatzes durch einen VLAN-Kennsatz, welcher der Schnittstelle entspricht, welche die Nachricht weiterleitet.

9. Vorrichtung nach Anspruch 6, wobei die Dienstkarte nach dem Verkapseln der Nachricht mit dem VLAN-Kennsatz durch die Schnittstellenkarte, außerdem konfiguriert ist zum:
Ausführen einer NAT-Verarbeitung an der Nachricht gemäß einer Netzadressenübersetzungstabelle (Network Address Translation table, NAT-Tabelle), die dem Kennsatz der äußeren Schicht entspricht.

10. Vorrichtung nach einem der Ansprüche 6 bis 9, wobei die Dienstkarte außerdem konfiguriert ist zum:
wenn die Nachricht eine Anfragenachricht für ein Adressenlösungsprotokoll (Address Resolution Protocol request message, ARP- Anfragenachricht) von dem Benutzergerät ist, Ermitteln einer Medienzugangssteuerungsadresse (Medium Access Control address, MAC-Adresse) des virtuellen Home-Gateways gemäß dem VLAN-Kennsatz; und
Senden einer ARP-Antwortnachricht zum Antworten auf die ARP-Anfragenachricht an das Benutzergerät, wobei eine Hardware-Adresse des Senders in der ARP-Antwortnachricht die MAC Adresse ist.

## Revendications

1. Procédé de traitement de messages, comprenant les étapes suivantes :
recevoir (S110) un message à partir d'un équipement externe ;
encapsuler (S120) le message avec une étiquette de réseau local virtuel VLAN, l'étiquette VLAN correspondant à un équipement utilisateur qui envoie ou reçoit le message ; et
déterminer (S130) une passerelle domestique virtuelle qui correspond à l'étiquette VLAN, de sorte que la passerelle domestique virtuelle traite le message qui est encapsulé avec l'étiquette VLAN, la passerelle domestique virtuelle correspondant à l'équipement utilisateur ;
le procédé étant **caractérisé en ce que**
l'étiquette VLAN comporte une étiquette de couche externe et une étiquette de couche interne, et l'étiquette de couche externe est utilisée pour déterminer une direction de flux du message.

2. Procédé selon la revendication 1, dans lequel, lorsqu'une interface de PORT de procédé d'encapsulation de réseau optique passif gigabit GEM reçoit le message, l'étiquette VLAN correspond à l'interface GEM PORT, et l'interface GEM PORT correspond à l'équipement utilisateur.

3. Procédé selon la revendication 1 ou 2, dans lequel, après l'étape consistant à encapsuler le message avec l'étiquette VLAN, le procédé comprend en outre :
déterminer (S210) une interface qui transmet le message ; et
remplacer (S220) l'étiquette VLAN par une étiquette VLAN qui correspond à l'interface qui transmet le message.

4. Procédé selon la revendication 1, dans lequel, après l'étape consistant à encapsuler le message avec l'étiquette VLAN, le procédé comprend en outre :
selon une table de traduction d'adresses réseau NAT qui correspond à l'étiquette de couche externe, exécuter un traitement NAT sur le message.

5. Procédé selon l'une quelconque des revendications 1 à 4, dans lequel le procédé comprend en outre :
lorsque le message est un message de requête de protocole de résolution d'adresse ARP émis à partir de l'équipement utilisateur, déterminer (S440) une adresse de contrôle d'accès au support MAC de la passerelle domestique virtuelle selon l'étiquette VLAN ; et
envoyer (S450) un message de réponse ARP pour répondre au message de requête ARP à l'équipement utilisateur, une adresse matérielle d'expéditeur dans le message de réponse ARP étant l'adresse MAC.

6. Dispositif de traitement de messages (500), comprenant :
une carte d'interface (510), configurée pour recevoir un message à partir d'un équipement externe, et configurée pour encapsuler le message avec une étiquette de réseau local virtuel VLAN, l'étiquette VLAN correspondant à un équipement utilisateur qui envoie ou reçoit le message ; et
une carte de service (520), configurée pour déterminer une passerelle domestique virtuelle qui correspond à l'étiquette VLAN, afin que la passerelle domestique virtuelle traite le message qui est encapsulé avec l'étiquette VLAN, la passerelle domestique virtuelle correspondant à l'équipement utilisateur ;
le dispositif de traitement de messages étant **caractérisé en ce que** l'étiquette VLAN comprend une étiquette de couche externe et une étiquette de couche interne, et l'étiquette de couche externe est utilisée pour déterminer une direction de flux du message.

7. Dispositif selon la revendication 6, dans lequel, lorsqu'une interface GEM PORT de la carte d'interface reçoit le message, l'étiquette VLAN correspond à l'interface GEM PORT, et l'interface GEM PORT correspond à l'équipement utilisateur.

8. Dispositif selon la revendication 6 ou 7, dans lequel, après que la carte d'interface a encapsulé le message avec l'étiquette VLAN, la carte de service est en outre configurée pour :
déterminer une interface qui transmet le message ; et
remplacer l'étiquette VLAN par une étiquette VLAN qui correspond à l'interface qui transmet le message.

9. Dispositif selon la revendication 6, dans lequel, après que la carte d'interface a encapsulé le message avec l'étiquette VLAN, la carte de service est en outre configurée pour :
exécuter un traitement NAT sur le message selon une table de traduction d'adresses réseau NAT qui correspond à l'étiquette de couche externe.

10. Dispositif selon l'une quelconque des revendications 6 à 9, dans lequel la carte de service est en outre configurée pour :
lorsque le message est un message de requête de protocole de résolution d'adresse ARP émis à partir de l'équipement utilisateur, déterminer une adresse de contrôle d'accès au support MAC de la passerelle domestique virtuelle selon l'étiquette VLAN ; et
envoyer un message de réponse ARP pour répondre au message de requête ARP à l'équipement utilisateur, une adresse matérielle d'expéditeur dans le message de réponse ARP étant l'adresse MAC.
